# EUROPEAN PATENT APPLICATION

(11) **EP 1 502 705 A1**
(43) Date of publication of application: **02.02.2005**
(21) Application number: 04102266.6
(22) Date of filing: 24.05.2004
(51) Int. Cl.: B25B 13/48, F16B 23/00

(54) **Key for anti-theft nuts or bolts**

(30) Priority: 01.08.2003 IT TO20030598
(71) Applicant: Groppo, Lazzaro, 12040 Sanfre' (CN) (IT); Groppo, Matteo, 12042 Bra (CN) (IT)
(72) Inventor: Groppo, Lazzaro, 12040 Sanfre' (CN) (IT); Groppo, Matteo, 12042 Bra (CN) (IT)
(74) Representative: Robba, Pierpaolo

(57) **Abstract**

Key (11) for anti-theft nuts or bolts (13) of the type provided with at least one groove or series of holes (27) for the engagement with said key, said key comprising: a first external bushing (17) for centring said key (11) on the head of said nuts or bolts (13); a second hollow bushing (19) partially housed inside said first bushing (17) and exhibiting the projecting portion externally to said first bushing (17) having an hexagonal section for allowing the rotation of said key (11) by means of a conventional tool for nuts or bolts; a cylinder (21), inserted inside said second bushing (19) and provided with at least one axial projection (23) able to engage itself with said at least one groove or series of holes (27), wherein said cylinder (21) can move backwards inside said second bushing (19) when a sufficient force is applied in axial direction between said cylinder (21) and said second bushing (19), so that said projection (23) is not able any more to engage itself with said groove (27).

## Description

The present invention refers to a key for anti-theft nuts or bolts.

In particular, the invention concerns a key for anti-theft blocking nuts or bolts for vehicle wheels.

Anti-theft blocking nuts for vehicle wheels are known. Said nuts are generally blind and exhibit a threaded seat in order to be screwed on the head of the stud bolt provided on the wheel hub and in order to be tightened against the rim of the wheel itself. The side surface of said nuts is smooth and preferably convex so that said nuts can not be loosened by using a normal key for tubes, pliers or other similar tools. For allowing said nuts to rotate, it is provided a curvilinear axial groove having an irregular shape, or alternatively a series of holes, in said groove being it possible to engage a complementary projection provided on a key; in this way, the nuts can be loosened and removed only by using a specific key which exhibits a projection complementary to said groove and which is provided to the user together with the nuts.

Such anti-theft blocking nuts and corresponding keys are described for instance in US 3,241,408 and in US 4,664,000.

It is clear that, instead of using a nut screwed on a stud bolt, it is also possible to use an anti-theft blocking bolt, said bolt being directly mounted on the hub of the wheel of a vehicle and being provided on the head of said groove.

Due to the limited space available on the head of the nut or bolt, it is not possible to manufacture an unlimited number of different grooves and corresponding keys. On the contrary, the range of feasible grooves is rather limited and said grooves turn out to be similar each other.

For this reason, by using a key with a projection having any shape and by applying a sufficient force in axial direction (for instance by using a hammer or a sledge), it is sometimes possible to make said projection penetrate also into the grooves which are not complementary to said projection and, as a consequence, to loosen nuts or bolts different from those which have been provided together with said key.

In other words, by buying only one key of the above mentioned type, it would be sometimes possible to unscrew an anti-theft blocking nut or bolt provided with a groove having any shape.

It is therefore a main object of the present invention to overcome the above mentioned inconvenience by realising a key which may be employed exclusively for loosening and for removing the nuts or bolts presenting a groove which corresponds exactly to the projection with which said key is provided.

This and other objects are obtained by means of a key for anti-theft blocking nuts or bolts as claimed in the hereby attached claims.

In the key according to the invention, in case the projection of said key does not correspond to the groove of the nut or bolt and if it is applied to the bushing, in which it is inserted the cylinder carrying said projection, a force directed along the axis of said bushing, said cylinder tends to move backwards inside said bushing thus making the key useless.

In a preferred embodiment, said bushing presents a deformable throttled portion which allows said cylinder to penetrate more deeply inside said bushing.

In another embodiment, a deformable or elastic element is interposed between said bushing and said cylinder, so that the force exerted on said bushing has the effect of compressing said deformable element by making said cylinder move backwards inside said bushing.

In a further embodiment of the invention, said bushing and said cylinder are kept integral with each other by a breakable element which breaks under the effect of a sufficient force, thereby allowing said cylinder to move backwards inside said bushing.

Some preferred embodiments of the key according to the invention, provided as non-limitative examples, will be now described more in detail in the following with particular reference to the hereby attached figures, wherein:
- Figure 1 is a longitudinal section of the key according to a first embodiment of the invention, said key being mounted on an anti-theft blocking nut for vehicle wheels;
- Figure 2 is a cross section according to line II-II of Figure 1;
- Figure 3 is a cross section according to line III-III of Figure 1;
- Figure 4 is a longitudinal section of the key according to a second embodiment of the invention;
- Figure 5 is a longitudinal section of the key according to a third embodiment of the invention.

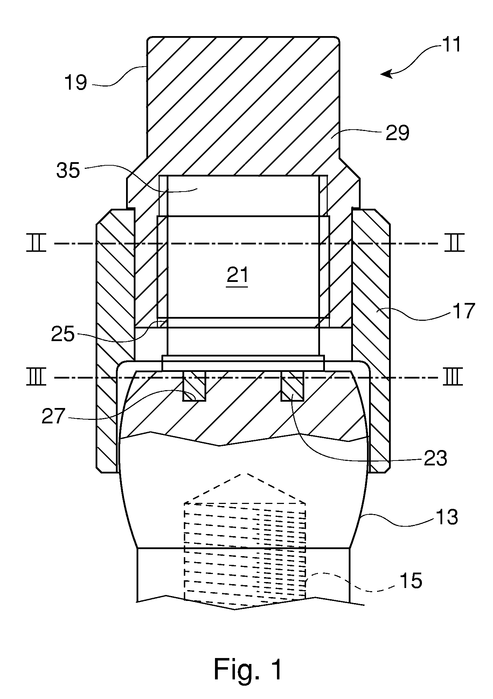

With reference to Figure 1, it is shown a key 11 according to the invention, said key being coupled with an anti-theft blocking nut 13. Said nut 13 is screwed on a stud bolt 15 fixed to the hub of the wheel of a vehicle for blocking one of the wheel rims.

The key 11 is substantially constituted by three elements:
- an external bushing 17 for centring the key 11 on the nut 13;
- an hollow internal bushing 19 which is partially driven inside said first bushing 17 and which is provided on the projecting portion external to said first bushing 17 with an head having an hexagonal section, on said head being it possible to engage a key or similar tool for rotating said key 11;
- a cylinder 21, inserted inside said internal bushing 19, said cylinder being provided with at least one axial projection 23 able to engage itself with one groove or with a series of holes 27 provided on the nut 13 and blocked in said internal bushing 19 by caulking the edge 25 of said bushing 19.

Said internal bushing 19 further exhibits externally an annular projecting zone 29 able to abut against the edge of said external bushing 19.

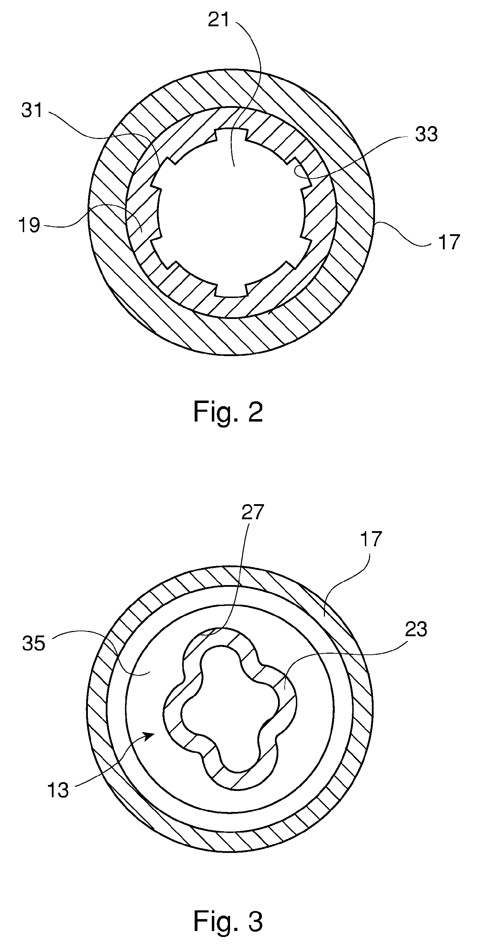

With reference to Figure 2, it is shown the coupling between the cylinder 21 and the internal bushing 19, said coupling being obtained by means of corresponding projections 31 and axial grooves 33 which prevent the mutual rotation between the cylinder 21 and the internal bushing 19.

With reference now to Figure 3, the nut 13 presents a curvilinear groove 27 having an undulated profile. The projection 23 of said cylinder 21 has a profile complementary to that of said groove 27 so as to allow their mutual engagement.

With reference again to Figure 1, it is clear from what above described that a torque applied to said internal bushing 19 by means of a key applied on the hexagonal projecting portion is transmitted to the cylinder 21 and to the nut 13, thus provoking said nut 13 to be screwed or loosened with respect to the stud bolt 15.

According to the invention, it is not vice versa possible to transmit to said cylinder 21 an intense force exerted in the direction of the axis of the internal bushing 19 in order to make the projection 23 penetrate into a groove 27 having a non complementary profile and thus corresponding to a different key combination. In fact, the application of an intense axial force on the bushing 19 towards the nut 13, said force being applied for instance with an hammer or with a sledge on the head of said bushing 19, would provoke the cylinder 21 to move backwards inside said bushing 19, thereby making the key 11 useless.

With reference to the embodiment shown in Figure 1, the internal bushing 19 internally exhibits an hollow portion 35, the diameter of which is such to create greater interference with said cylinder 21.

As a consequence, said cylinder 21 can completely penetrate inside said bushing 19 occupying also the hollow portion 35 only when a sufficiently intense force is exerted in axial direction.

The depth of said portion 35 is advantageously suitable to receive in the described conditions a portion of the cylinder 19 sufficient to bring the projection 23 into a configuration wherein it is not possible any more to engage it with the groove 27 of a blocking nut or bolt 13.

In case the key 11 is mounted on a nut 13 presenting a groove 23 not complementary to the projection 27 of the cylinder 21 and a force in axial direction is applied on the internal bushing 19 towards said nut 13, for instance with an hammer or a sledge, said force will have the effect of making the cylinder 21 penetrate into the seat 35, thereby making the key 11 useless.

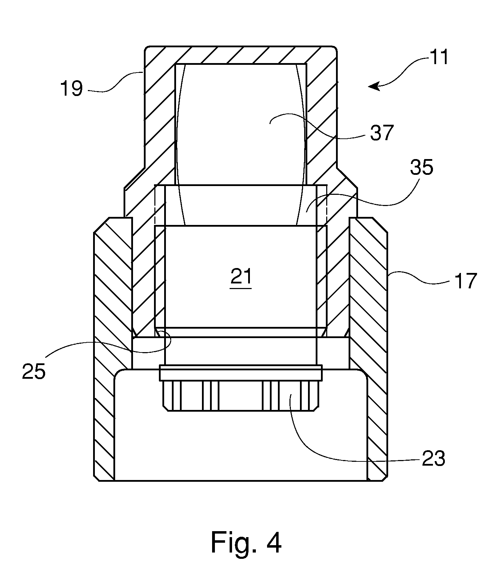

In Figure 4 it is shown a second embodiment of the key 11 according to the invention. According to this embodiment, a deformable element 37 interposed between the bottom of said portion 35 and the cylinder 21 is housed in the portion 35.

Said element 37 may be an elastic body, for instance a rubber plug, as shown in Figure 4, or an helical spring allowing to temporarily move the cylinder 21 backwards under the thrust of an axial force.

Advantageously, thanks to the deformable element 37, it is prevented the improper use as previously described of the key 11, but it still remains the possibility of reusing the key also after that a force in axial direction has been applied on the internal bushing 19 in the attempt of forcing the projection 23 into a not complementary groove 27.

Alternatively, it is also possible to use an element 37 made of crushable material, for instance an hollow body made of plastic, which allows the cylinder 21 to move backwards to the seat 35 upon breaking of said body.

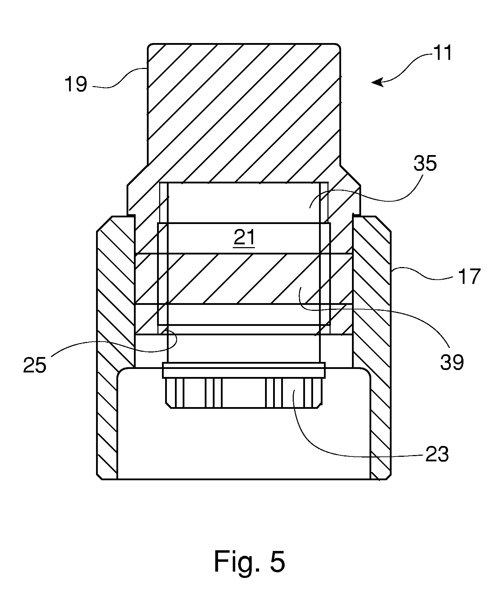

In Figure 5 it is shown a third embodiment of the key according to the invention. According to this embodiment, the internal bushing 19 and the cylinder 21 are kept integral by means of a radial pin 39 exhibiting a controlled breakage.

The breakage of the pin 39 when an axial force having a sufficient intensity is applied on the internal bushing 19 acts so that the cylinder 21 moves backwards to the portion 35, thus making the key 11 useless.

It is clear that the key according to the invention, in any of the shown embodiments, obtains the predetermined objects, as it prevents from unloosening an anti-theft blocking nut or bolt by using a key, the cylinder of which has a projection not complementary to the groove provided on said nut or bolt.

Likewise, it is clear that what has been described is given as a non-limitative example and that variants and modifications are possible without departing from the field of protection of the present invention.

## Claims

1. Key (11) for anti-theft nuts or bolts (13) of the type provided with at least one groove or series of axial holes (27) for the engagement with said key, said key comprising:
- a first external bushing (17) for centring said key (11) on the head of said nuts or bolts (13);
- a second hollow bushing (19) partially housed inside said first bushing (17) and exhibiting the projecting portion externally to said first bushing (17) having an hexagonal section for allowing the rotation of said key (11) by means of a conventional tool for nuts or bolts;
- a cylinder (21), inserted inside said second bushing (19) and provided with at least one projection (23) able to engage itself with said at least one groove or series of holes (27),
**characterised in that** said cylinder (21) can move backwards inside said second bushing (19) when a sufficient force is applied in axial direction on said second bushing, so that said projection (23) is not able any more to engage itself with said groove (27).

2. Key according to claim 1, wherein said second bushing (19) internally presents a portion (35) intended to receive part of said cylinder (21) when said cylinder is moved backwards and the diameter of said portion being such to create interference with said cylinder (21) so that the cylinder moves backwards when a force sufficient to overcome said interference is imparted.

3. Key according to claim 1, wherein a deformable or breakable element (37) is provided housed between said cylinder (21) and said second bushing.

4. Key according to claim 3, wherein said deformable element (37) is a spring.

5. Key according to claim 3, wherein said deformable element (37) is a rubber plug.

6. Key according to claim 1, wherein between said cylinder (21) and said second bushing (19) a radial pin (39) is provided for allowing the cylinder to move backwards when a force in axial direction sufficient to break said pin (39) is applied on said second bushing (19).
